(19) Europäisches Patentamt / European Patent Office / Office européen des brevets

(11) **EP 4 223 715 A1**

(12) **EUROPEAN PATENT APPLICATION**
published in accordance with Art. 153(4) EPC

(43) Date of publication:
**09.08.2023 Bulletin 2023/32**

(21) Application number: **21875956.1**

(22) Date of filing: **14.09.2021**

(51) International Patent Classification (IPC):
***C03C 17/36*** (2006.01)

(52) Cooperative Patent Classification (CPC):
**C03C 17/36**

(86) International application number:
**PCT/KR2021/012521**

(87) International publication number:
**WO 2022/071681 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 KR 20200127350**

(71) Applicant: **Hankuk Glass Industries Inc.**
**Seoul 06159 (KR)**

(72) Inventors:
• **HAN, Jin Woo**
  **Seoul 07713 (KR)**
• **HWANG, Jaeman**
  **Gunsan-si, Jeollabuk-do 54089 (KR)**

(74) Representative: **Gevers Patents**
**Intellectual Property House**
**Holidaystraat 5**
**1831 Diegem (BE)**

(54) **TRANSPARENT SUBSTRATE WITH MULTILAYER THIN FILM COATING, AND METHOD FOR MANUFACTURING SAME**

(57) The present disclosure relates to a transparent substrate including a multilayer thin film coating, the multilayer thin film coating includes a first dielectric layer, a second dielectric layer, and a metal layer, the metal layer is interposed between the first dielectric layer and the second dielectric layer in direct contact with each of the first dielectric layer and the second dielectric layer, the first dielectric layer includes silicon nitride represented by a chemical formula of $Si_3N_4$, the second dielectric layer includes silicon nitride represented by a chemical formula of $SiN_x$ (x < 1.33), and the metal layer includes one or more selected from the group consisting of Ag, Au, Cu, Al, Pt, Pd, Ni, Co, Fe, Mn, Cr, Mo, W, V, Ta, Nb, Sn, Pb, Sb, and Bi.

## FIG. 1

101

## Description

### [Technical Field]

The present invention relates to a transparent substrate including a multilayer thin film coating and a method for manufacturing the same. More particularly, the present invention relates to a colored transparent substrate including a multilayer thin film coating that has easily controllable properties and is manufactured by a simple method, and a method for manufacturing the same.

### [Background Art]

Transparent substrates such as glass have been developed to have various properties in order to be used as glazing for buildings or to be applied to windows for other various purposes. As part of this, various studies have been conducted to obtain a colored transparent substrate by changing a level of reflection and absorption according to a wavelength in a visible light region.

As a method for obtaining such a colored transparent substrate, there is a method of adding a pigment such as a metal oxide at the time of manufacture of glass, or coating a surface of a transparent substrate with a material having a color. Among them, in the case of the method of directly adding a pigment to glass like the former, only glass with one color may be manufactured in one melting bath, and a large amount of glass is lost until a desired color is obtained, which is not suitable in terms of manufacturing efficiency and cost.

Therefore, as a method for obtaining a colored transparent substrate, a method for forming a coating layer on a surface of a transparent substrate such as glass has been mainly studied. Examples of a method for expressing a color through a coating layer include a method of coating a light absorbing material and a method of extinguishing a specific wavelength by controlling a thickness of thin films having different refractive indices and using interference of light. However, it is difficult to implement the coating with the light absorbing material because it is impossible to find a material that selectively absorbs a specific wavelength range, and it is theoretically possible to use the interference of light by controlling the thickness of the thin film, but it may be implemented through a thick multilayer film including tens to hundreds of layers, such that a manufacturing cost is increased. Therefore, it is difficult to implement these methods in reality.

Accordingly, recently, as a method for imparting a color to a transparent substrate, a technique of dispersing metallic nanoparticles in a medium and selectively absorbing a specific wavelength using a localized surface plasmon resonance phenomenon has been attempted. That is, in a case where a size of the metallic nanoparticle is significantly smaller than a wavelength of an incident wave, collective oscillation of electrons distributed in the metallic nanoparticles is generated by an electric field of the incident wave, unlike in the case of the thin film. A period of the generated oscillation varies depending on the size of the metallic nanoparticle and a distance between the particles, and through this, an absorption wavelength region may be selectively controlled.

However, as a method for forming a metallic nanoparticle structure to use the localized surface plasmon resonance phenomenon, wet coating in which nanometals are dispersed in a dielectric material has been mostly used until now, but in a case where a multilayer film is formed by a combination with sputtering coating, additional costs and process difficulties occur. For example, there is a method of coating a dielectric layer and then applying a thin metal coating, but using a dewetting phenomenon of the metal material at this time, or a method of laminating both a dielectric layer and a metal layer and then artificially forming a discontinuous metal layer through laser or flash annealing. However, in the case, since the nanoparticles are arranged only in plane, that is, two-dimensionally, there is a limit to increasing a degree of light absorption, and in a case where a gap or the like occurs in a process of forming an upper dielectric layer, the possibility of defects increases. Alternatively, there is a method using a mixture of a sputtering target itself with a metal material and a dielectric, or a method of installing two targets in one chamber to simultaneously deposit the two targets. However, even in this case, since the dielectric and the metal have different electrical properties, it is difficult to adjust the particle size, and the process is unstable and has low reproducibility, there is a limit to implementing a layer that selectively absorbs light through this method and controlling properties of the layer.

### [Disclosure]

### [Technical Problem]

The present invention has been made in an effort to provide a transparent substrate including a selective light absorption layer whose light absorption properties are excellent due to uniform distribution of metallic nanoparticles and may be easily controlled in implementing a selective light absorption layer using a localized surface plasmon resonance phenomenon.

However, the problems to be solved by exemplary embodiment of the present invention are not limited to the problems described above, but may be variously extended within the technical spirit of the present invention.

### [Technical Solution]

An exemplary embodiment of the present invention provides a transparent substrate including a multilayer thin film coating, wherein the multilayer thin film coating includes a first dielectric layer, a second dielectric layer, and a metal layer, the metal layer is interposed between the first dielectric layer and the second dielectric layer in direct contact with each of the first dielectric layer and the second dielectric layer, the first dielectric layer includes silicon nitride represented by a chemical formula of $Si_3N_4$, the second dielectric layer includes silicon nitride represented by a chemical formula of $SiN_x$ (x < 1.33), and the metal layer includes one or more selected from the group consisting of Ag, Au, Cu, Al, Pt, Pd, Ni, Co, Fe, Mn, Cr, Mo, W, V, Ta, Nb, Sn, Pb, Sb, and Bi.

An effective thickness of the metal layer may be 0.2 nm to 1 nm.

The metal layer may include a first metal layer and a second metal layer, the first dielectric layer may include a first lower dielectric layer and a first upper dielectric layer, and the first lower dielectric layer, the first metal layer, the second dielectric layer, the second metal layer, and the first upper dielectric layer may be sequentially disposed in contact with each other away from the transparent substrate.

The second dielectric layer may be doped with one or more elements of Zr and Al.

The first dielectric layer may be doped with one or more elements of Zr and Al.

A sheet resistance of the metal layer may be 50 $\Omega$/sq to 500 $\Omega$/sq.

Another exemplary embodiment of the present invention provides a method for manufacturing a transparent substrate including a multilayer thin film coating, the method including: depositing a multilayer thin film coating on a transparent substrate; and performing a heat treatment on the transparent substrate on which the multilayer thin film coating is deposited to form an absorption layer, wherein the multilayer thin film coating includes a first dielectric layer, a second dielectric layer, and a metal layer, the metal layer is interposed between the first dielectric layer and the second dielectric layer in direct contact with each of the first dielectric layer and the second dielectric layer, the first dielectric layer includes silicon nitride represented by a chemical formula of $Si_3N_4$, the second dielectric layer includes silicon nitride represented by a chemical formula of $SiN_x$ (x < 1.33), and an absorption layer in which a metal of the metal layer is dispersed in a dielectric medium of the second dielectric layer in a form of metallic nanoparticles is formed by the heat treatment.

The metal layer may include one or more selected from the group consisting of Ag, Au, Cu, Al, Pt, Pd, Ni, Co, Fe, Mn, Cr, Mo, W, V, Ta, Nb, Sn, Pb, Sb, and Bi.

A sheet resistance of the absorption layer may be 1,000 $\Omega$/sq or more.

A temperature of the heat treatment may be 500°C or higher and 750°C or lower.

A time for the heat treatment may be 5 minutes or longer and 20 minutes or shorter.

The second dielectric layer may be formed in the multilayer thin film coating by a sputtering process, and an absorption wavelength range of the absorption layer may be controlled by adjusting a nitrogen concentration during the sputtering process.

The metal layer may be formed in the multilayer thin film coating by a sputtering process, and an absorption amount of the absorption layer may be controlled by adjusting power applied to a metal target during the sputtering process.

An effective thickness of the metal layer may be 0.2 nm to 1 nm.

The metal layer may include a first metal layer and a second metal layer, the first dielectric layer may include a first lower dielectric layer and a first upper dielectric layer, and the first lower dielectric layer, the first metal layer, the second dielectric layer, the second metal layer, and the first upper dielectric layer may be sequentially disposed in contact with each other away from the transparent substrate.

The second dielectric layer may be doped with one or more elements of Zr and Al.

The first dielectric layer may be doped with one or more elements of Zr and Al.

Yet another exemplary embodiment of the present invention provides a transparent substrate including a multilayer thin film coating, wherein the multilayer thin film coating includes an absorption layer that absorbs electromagnetic waves in a predetermined wavelength range using a localized surface plasmon resonance phenomenon, the absorption layer includes a dielectric medium and metallic nanoparticles dispersed in the dielectric medium, the dielectric medium includes silicon nitride represented by a chemical formula of $SiN_x$ (x < 1.33), and the metallic nanoparticles include one or more selected from the group consisting of Ag, Au, Cu, Al, Pt, Pd, Ni, Co, Fe, Mn, Cr, Mo, W, V, Ta, Nb, Sn, Pb, Sb, and Bi.

A sheet resistance of the absorption layer may be 1,000 $\Omega$/sq or more.

A thickness of the absorption layer may be 5 nm to 40 nm.

The multilayer thin film coating may include a first dielectric layer disposed on at least one surface of the absorption layer in direct contact with the absorption layer.

The first dielectric layer may include silicon nitride represented by a chemical formula of $Si_3N_4$.

The multilayer thin film coating may include a first lower dielectric layer and a first upper dielectric layer that are disposed in direct contact with the absorption layer with the absorption layer interposed therebetween.

As the x value is increased, a peak wavelength in the wavelength range absorbed by the absorption layer may be decreased.

As a content of the metallic nanoparticles in the dielectric medium is increased, the amount of electromagnetic waves absorbed by the absorption layer may be increased.

[Advantageous Effects]

As set forth above, according to an exemplary embodiment of the present invention, it is possible to obtain a transparent substrate including a multilayer thin film coating including a selective light absorption layer whose light absorption properties are excellent due to uniform distribution of metallic nanoparticles and may be easily controlled in implementing a selective light absorption layer using a localized surface plasmon resonance phenomenon.

[Description of the Drawings]

FIG. 1 is a view illustrating a cross section of a transparent substrate including a multilayer thin film coating before a heat treatment according to an exemplary embodiment of the present invention.
FIG. 2 is a view illustrating a cross section of a transparent substrate including a multilayer thin film coating before a heat treatment according to another exemplary embodiment of the present invention.
FIG. 3 is a flow chart illustrating a method for manufacturing a transparent substrate including a multilayer thin film coating according to an exemplary embodiment of the present invention.
FIG. 4 is a view illustrating a method for manufacturing a transparent substrate including a multilayer thin film coating according to an exemplary embodiment of the present invention.
FIG. 5 is a view illustrating a cross section of a transparent substrate including a multilayer thin film coating after a heat treatment according to an exemplary embodiment of the present invention.
FIG. 6 is a view illustrating a cross section of a transparent substrate including a multilayer thin film coating after a heat treatment according to another exemplary embodiment of the present invention.
FIG. 7 is a TEM image obtained by observing a cross section of a transparent substrate including a multilayer thin film coating obtained in Experimental Example 1.
FIG. 8 is a graph showing an absorption value in a transparent substrate including a multilayer thin film coating obtained in Experimental Example 2.
FIG. 9 is a graph showing an absorption value in a transparent substrate including a multilayer thin film coating obtained in Experimental Example 3.

[Mode for Invention]

Hereinafter, various exemplary embodiments of the present invention will be described in detail with reference to the accompanying drawings so that those skilled in the art may easily practice the present invention. However, the present invention may be implemented in various different forms and is not limited to exemplary embodiments described herein.

In order to clarify the present invention, the drawings and description are to be regarded as illustrative in nature and not restrictive, and the same elements or equivalents are referred to by the same reference numerals throughout the specification.

In addition, the size and thickness of each component illustrated in the drawings are randomly represented for convenience of explanation, but the present invention is not limited thereto. In the following drawings, thicknesses are exaggerated in order to clearly represent several layers and regions. In addition, in the drawings, the thicknesses of some layers and regions are exaggerated for convenience of explanation.

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present invention.

Terminologies used herein are to mention only a specific exemplary embodiment, and are not to limit the present invention. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part or is positioned "under" or "below", it means that the part may be directly on or above or under or below the other part or another part may be interposed therebetween. In contrast, when any part is positioned "directly on" another part or is positioned "directly under", it means that there is no part interposed therebetween.

Unless defined otherwise, all terms including technical terms and scientific terms used herein have the same meanings as understood by those skilled in the art to which the present invention pertains. Terms defined in a generally used dictionary are additionally interpreted as having the meanings matched to the related technical document and the currently disclosed contents, and are not interpreted as ideal or very formal meanings unless otherwise defined.

The terms "emissivity" and "transmittance" in the present invention are used as commonly known in the art. The "emissivity" is a criterion representing a degree of light absorbed and reflected at a given wavelength. In general, the emissivity satisfies the following equation.

$$\text{(Emissivity)} = 1 - \text{(Reflectance)}$$

The term "transmittance" in the present specification refers to a visible light transmittance.

Unless defined otherwise, all terms including technical terms and scientific terms used herein have the same meanings as understood by those skilled in the art to which the present invention pertains. Terms defined in a generally used dictionary are additionally interpreted as having the meanings matched to the related technical document and the currently disclosed contents, and are not interpreted as ideal or very formal meanings unless otherwise defined.

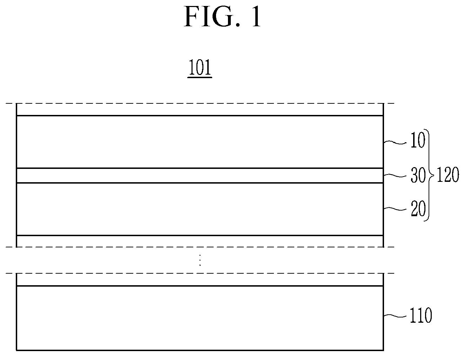

FIG. 1 is a view illustrating a cross section of a transparent substrate including a multilayer thin film coating before a heat treatment according to an exemplary embodiment of the present invention.

Referring to FIG. 1, a transparent substrate 101 including a multilayer thin film coating before a heat treatment includes a transparent substrate 110 and a multilayer thin film coating 120 formed on the transparent substrate 110 and including a second dielectric layer 20, a metal layer 30, and a first dielectric layer 10. In this case, the metal layer 30 is interposed between the first dielectric layer 10 and the second dielectric layer 20 in direct contact with the first dielectric layer 10 and the second dielectric layer 20. In addition, although not illustrated, an additional optional layer may be further included between the transparent substrate 110 and the second dielectric layer 20 or on an upper portion of the first dielectric layer 10. For example, a metal layer having a low emission function, an antireflection layer disposed on each of upper and lower portions of the metal layer, or a protective layer may be included, and an overcoat layer for protecting the multilayer thin film coating may be included. That is, in various multilayer thin film coatings, the configuration of the present exemplary embodiment may be applied in various ways and is not particularly limited. In addition, the positions of the second dielectric layer 20 and the first dielectric layer 10 may be interchanged.

The transparent substrate 110 is not particularly limited, and is preferably manufactured using a hard inorganic material such as glass or a polymer-based organic material.

The first dielectric layer 10 is a layer formed in direct contact with the metal layer 30, and includes silicon nitride represented by a chemical formula of $Si_3N_4$. In addition, the silicon nitride may be silicon nitride sputtered using a silicon target doped with aluminum, zirconium, or the like. By doping with aluminum, a dielectric layer may be smoothly formed in a manufacturing process. In addition, by doping with zirconium, optical properties such as a refractive index may be controlled.

The second dielectric layer 20 is a layer formed in direct contact with the metal layer 30, and includes silicon nitride represented by a chemical formula of $SiN_x$

($x < 1.33$). The silicon nitride constituting the second dielectric layer 20 is stoichiometrically in a state in which silicon is excessive (or nitrogen is insufficient), and x in $SiN_x$ is less than 1.33. Preferably, x in $SiN_x$ may be less than 1.25. The second dielectric layer 20 may be formed of silicon nitride sputtered using a silicon target doped with an element such as zirconium or aluminum. In the present exemplary embodiment, although the second dielectric layer 20 is illustrated as being formed a lower portion of the metal layer 30, the present invention is not limited thereto, and the positions of the second dielectric layer 20 and the first dielectric layer 10 are interchanged, such that the second dielectric layer 20 may be formed on an upper portion of the metal layer 30.

The metal layer 30 is a layer interposed between the second dielectric layer 20 and the first dielectric layer 10 in direct contact with these dielectric layers, and includes one or more selected from the group consisting of Ag, Au, Cu, Al, Pt, Pd, Ni, Co, Fe, Mn, Cr, Mo, W, V, Ta, Nb, Sn, Pb, Sb, and Bi. A metal material included in the metal layer 30 exists as metallic nanoparticles in an absorption layer during a heat treatment described below. Preferably, the metal layer 30 may be formed of silver (Ag).

An effective thickness of the metal layer 30 is 0.2 nm to 1 nm. Here, the effective thickness is a theoretical thickness derived from a value obtained by detecting the amount of individual nanoparticles coated and assuming a uniform layer. In the present exemplary embodiment, a measured thickness of an arbitrary deposited layer and a detection amount of a metal component detected by an X-ray fluorescence (XRF) analyzer are measured, and a relationship between them is defined. Thereafter, the effective thickness is derived by measuring a detection amount of a metal component in a sample whose effective thickness is to be measured by XRF, substituting the measured detection amount into the relationship between the detection amount and the measured thickness, and then converting the detection amount into a thickness.

In addition, since the thickness of the metal layer 30 is thin, discontinuous layer sections may partially exist, but the metal layer 30 is generally formed in a form of a thin film having a certain degree of conductivity. In this case, a sheet resistance of the metal layer 30 may be 50 Ω/sq to 500 Ω/sq.

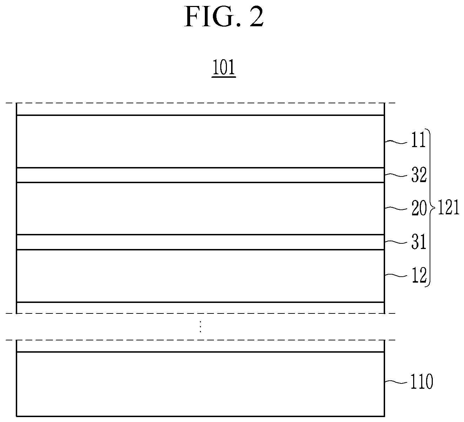

FIG. 2 is a view illustrating a cross section of a transparent substrate including a multilayer thin film coating before a heat treatment according to another exemplary embodiment of the present invention.

Referring to FIG. 2, a transparent substrate 101 including a multilayer thin film coating before a heat treatment includes a transparent substrate 110 and a multilayer thin film coating 121 formed on the transparent substrate 110 and including a first lower dielectric layer 12, a first metal layer 31, a second dielectric layer 20, a second metal layer 32, and a first upper dielectric layer 11. In this case, the first metal layer 31 is interposed between the first lower dielectric layer 12 and the second dielectric layer 20 in direct contact with these dielectric layers, and the second metal layer 32 is interposed between the second dielectric layer 20 and the first upper dielectric layer 11 in direct with these dielectric layers. In addition, although not specifically illustrated, an additional optional layer may be further included between the transparent substrate 110 and the first lower dielectric layer 12 or on an upper portion of the first upper dielectric layer 11.

The first lower dielectric layer 12 and the first upper dielectric layer 11 include silicon nitride represented by a chemical formula of $Si_3N_4$. In addition, the first lower dielectric layer 12 and the first upper dielectric layer 11 may be doped with aluminum, zirconium, or the like. By doping with aluminum, a dielectric layer may be smoothly formed in a manufacturing process. In addition, by doping with zirconium, optical properties such as a refractive index may be controlled.

The second dielectric layer 20 is a layer formed in direct contact with a lower portion of the metal layer 30, and includes silicon nitride represented by a chemical formula of $SiN_x$ ($x < 1.33$). The silicon nitride constituting the second dielectric layer 20 is stoichiometrically in a state in which the amount of silicon is excessive, and x in $SiN_x$ is less than 1.33. Preferably, x in $SiN_x$ may be less than 1.25. The second dielectric layer 20 may be doped with one or more elements such as zirconium and aluminum.

The first metal layer 31 and the second metal layer 32 include one or more selected from the group consisting of Ag, Au, Cu, Al, Pt, Pd, Ni, Co, Fe, Mn, Cr, Mo, W, V, Ta, Nb, Sn, Pb, Sb, and Bi. The metal materials included in the first metal layer 31 and the second metal layer 32 exist in a form of metallic nanoparticles in an absorption layer during a heat treatment described below. Preferably, the first metal layer 31 and the second metal layer 32 may be formed of silver (Ag). An effective thickness of each of the first metal layer 31 and the second metal layer 32 is 0.2 nm to 1 nm. In addition, each of the first metal layer 31 and the second metal layer 32 is formed in a layered form. However, since the thickness of each of the first metal layer 31 and the second metal layer 32 is thin, discontinuous layer sections may partially exist, but the first metal layer 31 and the second metal layer 32 are generally formed in a form of a thin film having a certain degree of conductivity. In this case, a total sheet resistance of the first metal layer 31 and the second metal layer 32 may be 50 $\Omega$/sq to 500 $\Omega$/sq.

Hereinafter, a method for manufacturing a transparent substrate including a multilayer thin film coating including an absorption layer that selectively absorbs light by performing a heat treatment on the transparent substrate 101 including the multilayer thin film coating 120 or 121 before thermal strengthening illustrated in FIGS. 1 and 2 will be described.

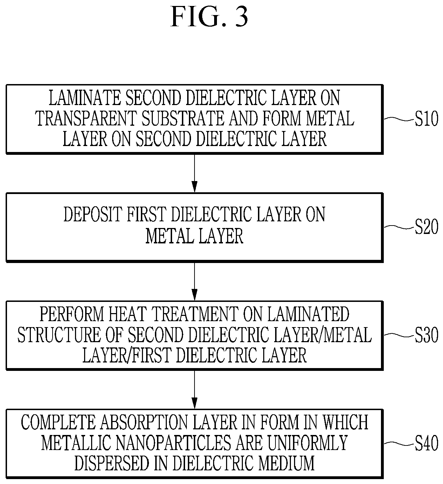

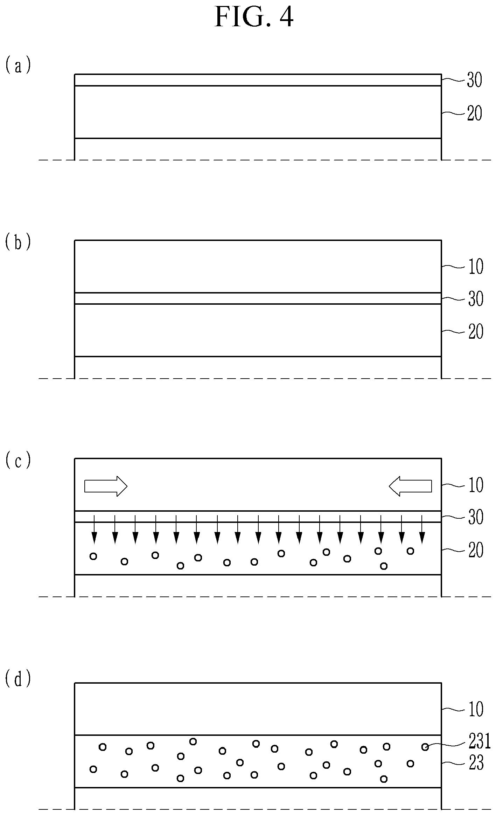

FIG. 3 is a flow chart illustrating a method for manufacturing a transparent substrate including a multilayer thin film coating according to an exemplary embodiment of the present invention, and FIG. 4 is a view illustrating a method for manufacturing a transparent substrate including a multilayer thin film coating according to an exemplary embodiment of the present invention. In FIGS. 3 and 4, the heat treatment for the multilayer thin film coating illustrated in FIG. 1 will be mainly described.

First, as illustrated in FIG. 4A, the second dielectric layer 20 is laminated, and the metal layer 30 is formed on the second dielectric layer 20 (S10).

The second dielectric layer 20 may be formed at a position where an absorption layer 23 is to be formed.

In this case, the second dielectric layer 20 includes silicon nitride represented by a chemical formula of $SiN_x$ ($x < 1.33$). The silicon nitride constituting the second dielectric layer 20 is stoichiometrically in a state in which the amount of silicon is excessive, and x in $SiN_x$ is less than 1.33. The second dielectric layer 20 may be formed by a sputtering process. In this case, an absorption wavelength range of an absorption layer to be formed later may be controlled by adjusting a nitrogen concentration during the sputtering process. A detailed description for this will be described below.

The metal layer 30 may be thinly deposited on a surface of the second dielectric layer 20 to have an effective thickness of 0.2 nm to 1 nm. In this case, the metal layer 30 is formed in a form of a thin layer, and a sheet resistance of the metal layer 30 may be 50 $\Omega$/sq to 500 $\Omega$/sq. The metal layer 30 may be formed by a sputtering process, and a light absorption amount of an absorption layer to be formed later may be controlled by adjusting power applied to a metal target during the sputtering process. A detailed description for this will be described below.

Next, the first dielectric layer 10 is deposited on the metal layer 30 (S20).

The first dielectric layer 10 includes silicon nitride having a composition of $Si_3N_4$, and has a composition different from that of the second dielectric layer 20. In this case, the first dielectric layer 10 may be formed at a thickness of 20 nm to 50 nm, and may be doped with one or more selected from aluminum and zirconium.

Next, a heat treatment is performed on the multilayer thin film coating in which the second dielectric layer 20, the metal layer 30, and the first dielectric layer 10 are laminated (S30).

The heat treatment includes thermal strengthening, bending, and the like, and in the present exemplary embodiment, the heat treatment is performed by a thermal strengthening treatment at a temperature of 500°C or higher and 750°C or lower for 5 minutes or longer and 20 minutes or shorter. Due to heat to be applied, the metal included in the metal layer 30 is dissolved by Si included in the second dielectric layer 20, and at the same time, as illustrated in FIG. 4C, the metal included in the metal layer 30 is pressurized by compressive stress generated in the first dielectric layer 10. Therefore, the metal included in the metal layer 30 is dispersed into the second dielectric layer 20.

More specifically, the metal included in the metal layer 30 has a property of being dissolved in Si present in an excessive amount in the second dielectric layer 20 at a high temperature. In addition, the metal included in the metal layer 30 has a property of dewetting from a surface of $Si_3N_4$ included in the first dielectric layer 10. For this reason, in a high-temperature environment of the heat treatment, the metal included in the metal layer 30 does not diffuse into the first dielectric layer 10 due to the dewetting phenomenon from a surface of the first dielectric layer 10, but is dissolved and dispersed into the second dielectric layer 20. In addition, in this case, since the compressive stress is generated in the first dielectric layer 10, as illustrated in FIG. 4C, pressure is applied to the metal layer 30 toward the second dielectric layer 20, such that the diffusion of the metal may be further promoted.

Accordingly, the absorption layer 23 in a form in which metallic nanoparticles 231 are uniformly dispersed in a dielectric medium is completed (S40).

That is, the entire metal included in the metal layer 30 is dispersed into the second dielectric layer 20, and has a form of the metallic nanoparticles 231 uniformly dispersed into the silicon nitride of the second dielectric layer 20. Accordingly, the metal is converted into a state of the metallic nanoparticles 231 discontinuously dispersed in the absorption layer 23 instead of being included in the metal layer 30 formed in a form of a thin film having a sheet resistance of 50 $\Omega$/sq to 500 $\Omega$/sq, and thus most of the conductivity of the metal layer 30 before the heat treatment disappears. Therefore, in the case of the transparent substrate including the absorption layer 23 as illustrated in FIG. 4D, a sheet resistance thereof becomes 1,000 $\Omega$/sq or more.

In addition, in the case of the absorption layer 23 obtained by the present exemplary embodiment, since the metallic nanoparticles 231 do not exist in a planar shape in the absorption layer 23, but are uniformly distributed in the layer and uniformly dispersed in a three-dimensional space, an absorption intensity may be more increased as described below, and an absorption degree may also be more easily adjusted.

Meanwhile, in the present exemplary embodiment, although the case where one metal layer 30 is interposed between the second dielectric layer 20 and the first dielectric layer 10 and is dispersed into the second dielectric layer 20 has been described as an example, the present invention is not limited thereto. As illustrated in FIG. 2, it is possible to form the first and second metal layers 31 and 32 disposed on both sides of the second dielectric layer 20, respectively, so that the metal is diffused from the both sides of the second dielectric layer 20.

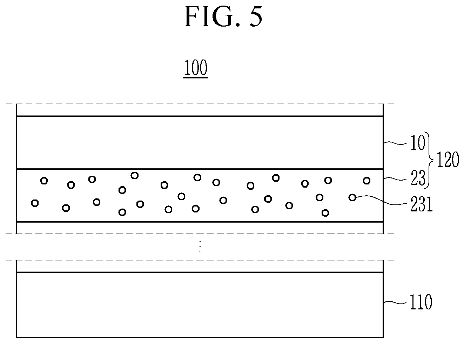

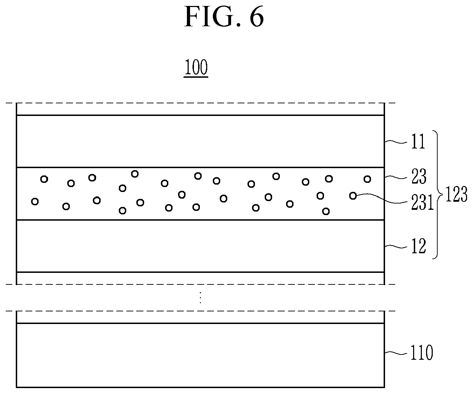

Hereinafter, a transparent substrate including a multilayer thin film coating after a heat treatment will be descried with reference to FIGS. 5 and 6.

FIG. 5 is a view illustrating a cross section of a transparent substrate including a multilayer thin film coating after a heat treatment according to an exemplary embodiment of the present invention, and FIG. 6 is a view illustrating a cross section of a transparent substrate including a multilayer thin film coating after a heat treatment according to another exemplary embodiment of the present invention.

Referring to FIG. 5, a transparent substrate 100 including a multilayer thin film coating according to an exemplary embodiment of the present invention includes a multilayer thin film coating 122 formed on a transparent substrate 110, and the multilayer thin film coating 122 includes an absorption layer 23 and a first dielectric layer 10. Although not specifically illustrated, an additional optional layer may be further included between the transparent substrate 110 and the absorption layer 23, or on an upper portion of the first dielectric layer 10. The configuration illustrated in FIG. 5 is a configuration obtained by performing a heat treatment on the transparent substrate including the multilayer thin coating of FIG. 1.

The absorption layer 23 includes a dielectric medium and metallic nanoparticles 231 dispersed in the dielectric medium. The dielectric medium includes silicon nitride ($SiN_x$, $x < 1.33$). The metallic nanoparticles may include one or more selected from the group consisting of Ag, Au, Cu, Al, Pt, Pd, Ni, Co, Fe, Mn, Cr, Mo, W, V, Ta, Nb, Sn, Pb, Sb, and Bi. A thickness of the absorption layer may be 5 nm to 40 nm.

The metallic nanoparticles 231 dispersed in the absorption layer 23 may absorb electromagnetic waves in a predetermined wavelength range using a localized surface plasmon resonance phenomenon. That is, when a size of the metallic nanoparticle 231 is significantly smaller than a wavelength of an incident wave, collective oscillation of electrons distributed in the metal nanoparticles 231 is generated by an electric field of the incident wave. A period of the generated oscillation varies depending on the size of the metallic nanoparticle 231 and a distance between the metallic nanoparticle 231, and through this, an absorption wavelength region may be selectively controlled. In particular, an absorption peak of the absorption layer 23 in which the metallic nanoparticles 231 are dispersed is controlled to be in a visible light region, such that the multilayer thin film coating 120 including the absorption layer 23 may have a specific color.

In an exemplary embodiment of the present invention, when forming a configuration of the metallic nanoparticles 231 dispersed in the dielectric medium, as described above, the metal layer 30 is formed on the second dielectric layer 20 including the dielectric medium and is subjected to a heat treatment to disperse the metal of the metal layer 30 into the dielectric medium in a form of the metallic nanoparticles 231, and at this stage, an absorption wavelength may be selected by controlling a composition of the dielectric medium. That is, in the silicon nitride of $SiN_x$ ($x < 1.33$) constituting the dielectric medium, as the x value is increased, a peak wavelength in the wavelength range absorbed by the absorption layer is decreased. Such an x value may be adjusted, for example, by varying a concentration of nitrogen ($N_2$) gas supplied during the sputtering process of the second dielectric layer 20. Therefore, according to an exemplary embodiment of the present invention, the absorption wavelength region of the absorption layer 23 may be selectively implemented by the sputtering process.

In addition, in an exemplary embodiment of the present invention, a degree of light absorbed by the absorption layer 23 may be controlled by controlling the thickness of the metal layer 30. That is, the amount of light absorbed may be increased by increasing a concentration of the metallic nanoparticles 231 dispersed in the dielectric medium in the absorption layer 23. The concentration of the metallic nanoparticles 231 dispersed in the dielectric medium may be adjusted by controlling the thickness of the metal layer 30 formed during sputtering. Therefore, the amount of light absorbed by the absorption layer 23 may also be easily controlled by the sputtering process.

In addition, a plurality of absorption layers 23 are included in the multilayer thin film coating 120, and in particular, reflective properties and color may be further controlled. For example, in a case where two or more absorption layers are included, a reflectance may be further reduced without affecting emissive properties of the multilayer thin film coating 120. In this case, the compositions (for example, the thickness of the absorption layer, the absorption peak wavelength, the concentration of the metallic nanoparticles, and the like) of the absorption layers may be the same as or different from each other, such that the multilayer thin film coating may be configured to have various absorption patterns, as necessary.

The first dielectric layer 10 is positioned on an upper portion of the absorption layer 23. The first dielectric layer 10 includes silicon nitride represented by a chemical formula of $Si_3N_4$. In addition, the first dielectric layer 10 may be doped with aluminum, zirconium, or the like. By doping with aluminum, a dielectric layer may be smoothly formed in a manufacturing process. In addition, by doping with zirconium, optical properties such as a refractive index may be controlled. The first dielectric layer 10 may function as an antireflection layer in the transparent substrate 100 including the multilayer thin film coating 122, but is not particularly limited.

The transparent substrate 100 including the multilayer thin film coating 122 includes the absorption layer 23 in which the metallic nanoparticles 231 are dispersed, but the metallic nanoparticles 231 exist in isolation in the absorption layer 23. Therefore, the transparent substrate 100 does not have conductivity and has insulating properties. That is, in the present exemplary embodiment, a sheet resistance of the absorption layer 23 is 1,000 $\Omega$/sq or more.

Referring to FIG. 6, a transparent substrate 100 including a multilayer thin film coating 123 according to another exemplary embodiment of the present invention includes a multilayer thin film coating 123 formed on a transparent substrate 110, and the multilayer thin film coating 123 includes a first lower dielectric layer 12, an absorption layer 23, and a first upper dielectric layer 11. Although not specifically illustrated, an additional optional layer may be further included between the transparent substrate 110 and the first lower dielectric layer 12 or on an upper portion of the first upper dielectric layer 11. The configuration illustrated in FIG. 6 is a configuration obtained by performing a thermal strengthening treatment on the transparent substrate including the multilayer thin coating of FIG. 2.

The configurations of the absorption layer 23 and the first upper dielectric layer 11 in the present exemplary embodiment are the same as the configurations of the absorption layer 23 and the first dielectric layer 10 in the exemplary embodiment of FIG. 5 described above. Therefore, a detailed description is omitted.

The first lower dielectric layer 12 includes silicon nitride represented by a chemical formula of $Si_3N_4$ like the configuration of the first upper dielectric layer 11. In addition, the first lower dielectric layer 12 may be doped with aluminum, zirconium, or the like. By doping with aluminum, a dielectric layer may be smoothly formed in a manufacturing process. In addition, by doping with zirconium, optical properties such as a refractive index may be controlled. The first lower dielectric layer 12 may function as an antireflection layer in the transparent substrate 100 including the multilayer thin film coating 123, but is not particularly limited. In addition, in the present exemplary embodiment, the first lower dielectric layer 12 has been described as being configured as a single layer, but is not limited thereto, and may have a multilayer structure including two or more layers.

As described above, the transparent substrate including the multilayer thin film coating according to an exemplary embodiment of the present invention includes the absorption layer 23 in which the metallic nanoparticles 231 are dispersed in the dielectric medium, such that the transparent substrate may be configured to absorb light having a specific wavelength, and in particular, the absorption layer 23 may be easily obtained by the sputtering process and the heat treatment. In addition, the wavelength region of light absorbed and the amount of light absorbed may be easily controlled by controlling the conditions of the sputtering process.

In addition, the transparent substrate including the multilayer thin film coating according to an exemplary embodiment of the present invention is a transparent substrate to which an aesthetic color is imparted by absorbing light in a specific wavelength region, and thus may be used in various industrial fields. For example, the transparent substrate including the multilayer thin film coating according to an exemplary embodiment of the present invention is a transparent substrate having a coating surface with a color, and may be used as cover glass of an electronic product, interior glass, and glazing of a building or an automobile. In addition, the transparent substrate including the multilayer thin film coating according to an exemplary embodiment of the present invention has no conductivity and has insulating properties, and thus may be effectively used as glass for a touch screen panel product.

Hereinafter, actions and effects according to an exemplary embodiment of the present invention will be described with reference to experimental examples.

Experimental Example 1: Experiment to Confirm Metallic Nanoparticles Dispersed in Dielectric Medium

As the transparent substrate 110, $Si_3N_4$ (13 nm)/$SiN_x$ (17 nm)/Ag (1 nm)/$Si_3N_4$ (38 nm) layers were sequentially laminated on a glass substrate, and these layers were subjected to a heat treatment at 650°C for 7 minutes.

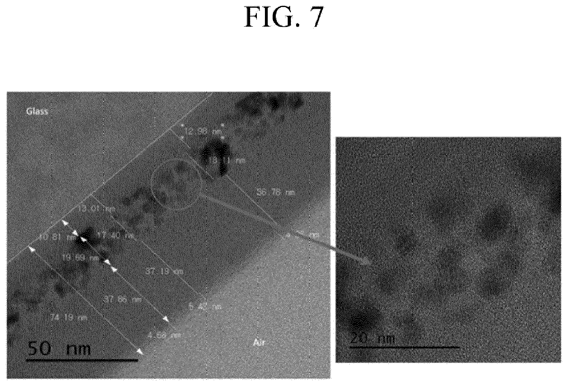

A TEM image obtained by observing a cross section of the obtained transparent substrate is illustrated in FIG. 7.

In FIG. 7, the parts appearing as dark spots are Ag crystals. That is, as illustrated in FIG. 7, it could be confirmed that the Ag crystals were uniformly distributed in the light absorption layer.

In addition, a sheet resistance value measured before the heat treatment was 150 $\Omega/m^2$, and a sheet resistance value measured after the heat treatment was 4G $\Omega/m^2$. It could be confirmed from this that the Ag nanoparticles were completely isolated from each other and dispersed in the absorption layer.

Experimental Example 2: Experiment to Confirm Absorption Wavelength Control according to Nitrogen Content in Dielectric Medium

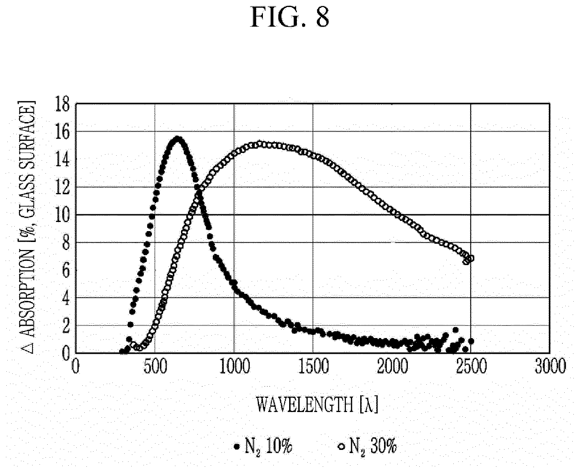

The deposition and the heat treatment were performed under the same conditions as those of Experimental Example 1 except for varying the deposition conditions of $SiN_x$. That is, in the deposition conditions of $SiN_x$, the concentration of $N_2$ injection gas (=$N_2/(N_2+Ar)$) was set to two conditions of 10% and 30%, and the deposition was performed by setting the rest of the conditions to be the same as those of Experimental Example 1. The $\triangle$ absorption values measured on the glass surface at this time are illustrated in FIG. 8. Here, the $\triangle$ absorption is a numerical value obtained by subtracting the "absorption value when only the dielectric medium (the second dielectric layer) in which the metallic nanoparticles are not included is present" from the "absorption value in the case of including the absorption layer in which the metallic nanoparticles are dispersed".

As a result, as illustrated in FIG. 8, it was confirmed that a peak value appeared in a wavelength region (yellow) near about 600 nm under the condition of a low concentration of $N_2$ (10%), whereas a peak value appeared in a wavelength region near about 1,100 nm under the condition of a high concentration of $N_2$ (30%). That is, it was confirmed that, in the dielectric medium of the absorption layer, the absorption wavelength region was changed according to the concentration condition of $N_2$. Therefore, it was confirmed that the light absorption was controlled to a desired wavelength region by adjusting the concentration of $N_2$, and thus selective light absorption was easily controlled by the sputtering process. Meanwhile, the maximum values of the absorption intensity in both the conditions (the condition of the low concentration of $N_2$ (10%) and the condition of the high concentration of $N_2$ (30%)) were about 15%, which were similar. That is, it is interpreted that the concentration condition of $N_2$ is involved in the selection of the absorption wavelength region and does not significantly affect the absorption intensity.

Experimental Example 3: Experiment to Confirm Light Absorption Amount Control according to Thickness of Metal Layer

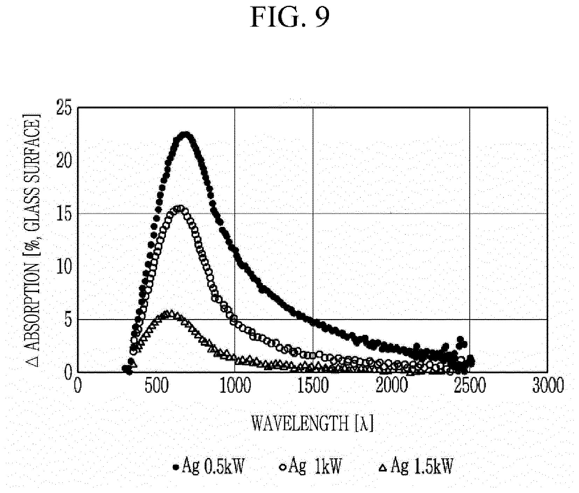

The deposition and the heat treatment were performed under the same conditions as those of Experimental Example 1 except for varying the deposition conditions of Ag. That is, in the deposition conditions of Ag, the power applied to the Ag target was changed to 0.5 kW, 1 kW, and 1.5 kW so that the thickness of Ag varied, and the deposition was performed by setting the rest of the conditions to be the same as those of Experimental Example 1 (the concentration conditions in the formation of $SiN_x$ were unified at 30%). The $\triangle$ absorption values measured on the glass surface at this time are illustrated in FIG. 9. Here, the $\triangle$ absorption is a numerical value obtained by subtracting the "absorption value when only the dielectric medium (the second dielectric layer) in which the metallic nanoparticles are not included is present" from the "absorption value in the case of including the absorption layer in which the metallic nanoparticles are dispersed" as in Experimental Example 2.

As a result, as illustrated in FIG. 9, it could be confirmed that, in the absorption wavelength, the peak value did not change significantly (in the range of about 600 nm to 650 nm) and the maximum value of absorption was increased. That is, it was confirmed that as the power applied to the Ag target was increased, the effective thickness of the Ag layer to be formed was increased, and as the thickness of Ag was increased, the amount of light absorbed by the thus formed absorption layer was increased. Therefore, it was confirmed that the amount of light absorbed was controlled by controlling the thickness of Ag.

As described above, according to an exemplary embodiment, in the transparent substrate including the multilayer thin film coating, a selective light absorption layer may be easily implemented using a localized surface plasmon resonance phenomenon, and a wavelength region of light and the amount of light absorbed by the absorption layer may be easily controlled by controlling the conditions of the sputtering process. In addition, the obtained absorption layer is in a state where metallic nanoparticles are isolated and uniformly dispersed in a dielectric medium and may obtain a sufficient amount of light absorption, and the obtained transparent substrate has insulating properties, and thus the transparent substrate may be appropriately used for a colored substrate in various fields.

The present invention is not limited to the exemplary embodiments, but may be prepared in various different forms, and it will be apparent to those skilled in the art to which the present invention pertains that the exemplary embodiments may be implemented in other specific forms without departing from the spirit or essential feature of the present invention. Therefore, it is to be understood that the exemplary embodiments described hereinabove are illustrative rather than being restrictive in all aspects.

[Description of symbols]

    100, 101: Transparent substrate with multilayer thin film coating
    110: Transparent substrate
    120, 121, 122, 123: Multilayer thin film coating
    10: First dielectric layer
    20: Second dielectric layer
    30: Metal layer
    23: Absorption layer
    231: Metal nanoparticles

**Claims**

1. A transparent substrate comprising a multilayer thin film coating,

    wherein the multilayer thin film coating includes a first dielectric layer, a second dielectric layer, and a metal layer,
    the metal layer is interposed between the first dielectric layer and the second dielectric layer in direct contact with each of the first dielectric layer and the second dielectric layer,
    the first dielectric layer includes silicon nitride represented by a chemical formula of $Si_3N_4$,
    the second dielectric layer includes silicon nitride represented by a chemical formula of $SiN_x$ (x < 1.33), and
    the metal layer includes one or more selected from the group consisting of Ag, Au, Cu, Al, Pt, Pd, Ni, Co, Fe, Mn, Cr, Mo, W, V, Ta, Nb, Sn, Pb, Sb, and Bi.

2. The transparent substrate of claim 1, wherein: an effective thickness of the metal layer is 0.2 nm to 1 nm.

3. The transparent substrate of claim 1, wherein:

    the metal layer includes a first metal layer and a second metal layer,
    the first dielectric layer includes a first lower dielectric layer and a first upper dielectric layer, and
    the first lower dielectric layer, the first metal layer, the second dielectric layer, the second metal layer, and the first upper dielectric layer are sequentially disposed in contact with each other in a direction away from the transparent substrate.

4. The transparent substrate of claim 1, wherein: the second dielectric layer is doped with one or more elements of Zr and Al.

5. The transparent substrate of claim 1, wherein: the first dielectric layer is doped with one or more elements of Zr and Al.

6. The transparent substrate of claim 1, wherein: a sheet resistance of the metal layer is 50 Ω/sq to 500 Ω/sq.

7. A method for manufacturing a transparent substrate including a multilayer thin film coating, the method comprising:

    depositing a multilayer thin film coating on a transparent substrate; and
    performing a heat treatment on the transparent substrate on which the multilayer thin film coating is deposited to form an absorption layer,
    wherein the multilayer thin film coating includes a first dielectric layer, a second dielectric layer, and a metal layer,
    the metal layer is interposed between the first dielectric layer and the second dielectric layer in direct contact with each of the first dielectric layer and the second dielectric layer,
    the first dielectric layer includes silicon nitride represented by a chemical formula of $Si_3N_4$,
    the second dielectric layer includes silicon nitride represented by a chemical formula of $SiN_x$ (x < 1.33), and
    an absorption layer in which a metal of the metal layer is dispersed in a dielectric medium of the second dielectric layer in a form of metallic nanoparticles is formed by the heat treatment.

8. The method of claim 7, wherein: the metal layer includes one or more selected from the group consisting of Ag, Au, Cu, Al, Pt, Pd, Ni, Co, Fe, Mn, Cr, Mo, W, V, Ta, Nb, Sn, Pb, Sb, and Bi.

9. The method of claim 7, wherein: a sheet resistance of the absorption layer is 1,000 Ω/sq or more.

**10.** The method of claim 7, wherein:
a temperature of the heat treatment is 500°C or higher and 750°C or lower.

**11.** The method of claim 7, wherein:
a time for the heat treatment is 5 minutes or longer and 20 minutes or shorter.

**12.** The method of claim 7, wherein:

the second dielectric layer is formed in the multilayer thin film coating by a sputtering process, and
an absorption wavelength range of the absorption layer is controlled by adjusting a nitrogen concentration during the sputtering process.

**13.** The method of claim 7, wherein:

the metal layer is formed in the multilayer thin film coating by a sputtering process, and
an absorption amount of the absorption layer is controlled by adjusting power applied to a metal target during the sputtering process.

**14.** The method of claim 7, wherein:
an effective thickness of the metal layer is 0.2 nm to 1 nm.

**15.** The method of claim 7, wherein:

the metal layer includes a first metal layer and a second metal layer,
the first dielectric layer includes a first lower dielectric layer and a first upper dielectric layer, and
the first lower dielectric layer, the first metal layer, the second dielectric layer, the second metal layer, and the first upper dielectric layer are sequentially disposed in contact with each other in a direction away from the transparent substrate.

**16.** The method of claim 7, wherein:
the second dielectric layer is doped with one or more elements of Zr and Al.

**17.** The method of claim 7, wherein:
the first dielectric layer is doped with one or more elements of Zr and Al.

**18.** A transparent substrate comprising a multilayer thin film coating,

wherein the multilayer thin film coating includes an absorption layer that absorbs electromagnetic waves in a predetermined wavelength range using a localized surface plasmon resonance phenomenon,

the absorption layer includes a dielectric medium and metallic nanoparticles dispersed in the dielectric medium,
the dielectric medium includes silicon nitride represented by a chemical formula of $SiN_x$ ($x < 1.33$), and
the metallic nanoparticles include one or more selected from the group consisting of Ag, Au, Cu, Al, Pt, Pd, Ni, Co, Fe, Mn, Cr, Mo, W, V, Ta, Nb, Sn, Pb, Sb, and Bi.

**19.** The transparent substrate of claim 18, wherein:
a sheet resistance of the absorption layer is 1,000 $\Omega$/sq or more.

**20.** The transparent substrate of claim 18, wherein:
a thickness of the absorption layer is 5 nm to 40 nm.

**21.** The transparent substrate of claim 18, wherein:
the multilayer thin film coating includes a first dielectric layer disposed on at least one surface of the absorption layer in direct contact with the absorption layer.

**22.** The transparent substrate of claim 21, wherein:
the first dielectric layer includes silicon nitride represented by a chemical formula of $Si_3N_4$.

**23.** The transparent substrate of claim 18, wherein:
the multilayer thin film coating includes a first lower dielectric layer and a first upper dielectric layer that are disposed in direct contact with the absorption layer with the absorption layer interposed therebetween.

**24.** The transparent substrate of claim 18, wherein:
as the x value is increased, a peak wavelength in the wavelength range absorbed by the absorption layer is decreased.

**25.** The transparent substrate of claim 18, wherein:
as a content of the metallic nanoparticles in the dielectric medium is increased, the amount of electromagnetic waves absorbed by the absorption layer is increased.

# FIG. 1

101

# FIG. 2

<u>101</u>

# FIG. 3

LAMINATE SECOND DIELECTRIC LAYER ON TRANSPARENT SUBSTRATE AND FORM METAL LAYER ON SECOND DIELECTRIC LAYER —S10

DEPOSIT FIRST DIELECTRIC LAYER ON METAL LAYER —S20

PERFORM HEAT TREATMENT ON LAMINATED STRUCTURE OF SECOND DIELECTRIC LAYER/METAL LAYER/FIRST DIELECTRIC LAYER —S30

COMPLETE ABSORPTION LAYER IN FORM IN WHICH METALLIC NANOPARTICLES ARE UNIFORMLY DISPERSED IN DIELECTRIC MEDIUM —S40

# FIG. 4

(a)

30
20

(b)

10
30
20

(c)

10
30
20

(d)

10
231
23

# FIG. 5

# FIG. 6

<u>100</u>

FIG. 7

# FIG. 8

# FIG. 9

<div align="center">**INTERNATIONAL SEARCH REPORT**</div>

| | |
|---|---|
| International application No. |
| **PCT/KR2021/012521** |

**A.    CLASSIFICATION OF SUBJECT MATTER**

**C03C 17/36**(2006.01)i

According to International Patent Classification (IPC) or to both national classification and IPC

**B.    FIELDS SEARCHED**

Minimum documentation searched (classification system followed by classification symbols)

C03C 17/36(2006.01); B32B 15/04(2006.01); B32B 7/02(2006.01); B32B 9/00(2006.01); B44F 1/06(2006.01); G01N 21/17(2006.01); G01N 21/27(2006.01); G01N 21/55(2006.01); G02B 5/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 국소 표면 플라즈몬 공명(localized surface plasmon resonance), 유전체층(dielectric layer), 금속층(metal layer), 투명 기재(transparent substrate), 규소 질화물(silicone nitride), 다층 박막 코팅(multilayer thin film coating), 금속 나노 입자(metal nano particle)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0008558 A (3E NANO INC.) 28 January 2020 (2020-01-28)<br>See paragraphs [0055]-[0108]; claims 1, 19, 20, 25 and 36; and figure 1. | 1-25 |
| A | KR 10-2010-0002960 A (SEOUL NATIONAL UNIVERSITY INDUSTRY FOUNDATION) 07 January 2010 (2010-01-07)<br>See paragraphs [0026]-[0076]; and figures 1-6. | 1-25 |
| A | KR 10-2020-0009329 A (KOREA INSTITUTE OF SCIENCE AND TECHNOLOGY) 30 January 2020 (2020-01-30)<br>See paragraphs [0010]-[0060]; and figures 1, 2 and 6. | 1-25 |
| A | JP 2006-208057 A (TAIYO YUDEN CO., LTD.) 10 August 2006 (2006-08-10)<br>See paragraphs [0008]-[0022]; and figure 1. | 1-25 |

☑ Further documents are listed in the continuation of Box C.        ☑ See patent family annex.

| | |
|---|---|
| \*    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **24 December 2021** | **24 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/012521**

## C.      DOCUMENTS CONSIDERED TO BE RELEVANT

| Category* | Citation of document, with indication, where appropriate, of the relevant passages | Relevant to claim No. |
|---|---|---|
| A | JP 2014-094448 A (ASAHI GLASS CO., LTD.) 22 May 2014 (2014-05-22)<br>    See paragraphs [0020]-[0029]; and figures 1 and 2. | 1-25 |
| A | US 2018-0239070 A1 (PRESIDENT AND FELLOWS OF HARVARD COLLEGE) 23 August 2018 (2018-08-23)<br>    See paragraphs [0003]-[0051]; and figures 1-4. | 1-25 |

Form PCT/ISA/210 (second sheet) (July 2019)

**INTERNATIONAL SEARCH REPORT**
**Information on patent family members**

International application No.

**PCT/KR2021/012521**

| Patent document cited in search report | | | Publication date (day/month/year) | Patent family member(s) | | | Publication date (day/month/year) |
|---|---|---|---|---|---|---|---|
| KR | 10-2020-0008558 | A | 28 January 2020 | AU | 2018-255726 | A1 | 21 November 2019 |
| | | | | AU | 2018-255726 | A1 | 25 October 2018 |
| | | | | CA | 3061105 | A1 | 25 October 2018 |
| | | | | CN | 111051929 | A | 21 April 2020 |
| | | | | EP | 3612867 | A1 | 26 February 2020 |
| | | | | JP | 2020-518033 | A | 18 June 2020 |
| | | | | US | 2020-0139935 | A1 | 07 May 2020 |
| | | | | WO | 2018-191817 | A1 | 25 October 2018 |
| KR | 10-2010-0002960 | A | 07 January 2010 | KR | 10-0991563 | B1 | 04 November 2010 |
| KR | 10-2020-0009329 | A | 30 January 2020 | KR | 10-2187105 | B1 | 04 December 2020 |
| | | | | US | 2020-0025988 | A1 | 23 January 2020 |
| | | | | WO | 2020-017687 | A1 | 23 January 2020 |
| JP | 2006-208057 | A | 10 August 2006 | US | 2006-0194344 | A1 | 31 August 2006 |
| JP | 2014-094448 | A | 22 May 2014 | WO | 2012-115111 | A1 | 30 August 2012 |
| US | 2018-0239070 | A1 | 23 August 2018 | US | 10539727 | B2 | 21 January 2020 |
| | | | | WO | 2017-041085 | A1 | 09 March 2017 |

Form PCT/ISA/210 (patent family annex) (July 2019)